# EUROPEAN PATENT SPECIFICATION

(11) **EP 0 348 548 B1**
(45) Date of publication and mention of the grant of the patent: **27.10.1993**
(21) Application number: 88110545.6
(22) Date of filing: 01.07.1988
(51) Int. Cl.: G01B 7/00, B23Q 17/22

(54) **Touch sensor**
Kontaktfühler
Palpeur

(43) Date of publication of application: 03.01.1990
(73) Proprietor: METROL CO., LTD., Tachikawa-shi Tokyo (JP)
(72) Inventor: Matsuhashi, Akira, Koganei-shi Tokyo (JP)
(74) Representative: Kahler, Kurt, Dipl.-Ing.

(56) References cited:
- DE-A- 2 725 996
- GB-A- 2 139 357
- US-A- 2 899 653
- US-A- 3 229 587
- US-A- 4 488 019
- US-A- 4 547 971
- PATENT ABSTRACTS OF JAPAN, vol. 11, no. 58, 21.02.1987; & JP-A-61 223509
- American Electricians' Handbook, W.I. Summers, McGraw-Hill Book Company, 1987, pages 4-24 and 4-25
- "Electronic Welt '92", Catalogue of electronic components, Conrad Electronic GmbH, Hirschau, Germany

## Description

The present invention relates to a touch sensor as described in the pre-characterizing part of claim 1.

As is well known, for instance, a NC lathe, a manufacturing line, or the like is generally provided with a plurality of touch sensors respectively having projections in a plurality of directions in correspondence with the directions of movement of objects to be detected such as cutting tools, members or the like in order to detect the positions of the objects to be detected.

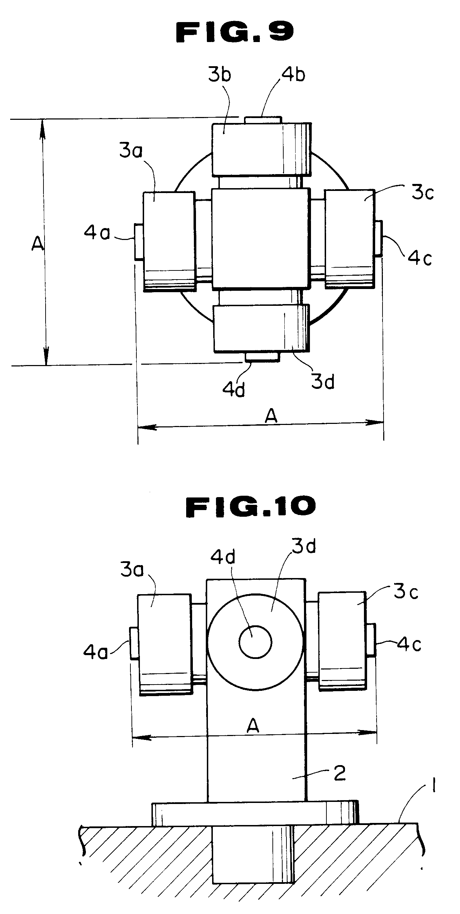

A conventional technique concerning this touch sensor will be described with reference to Figs. 9 and 10. Plungers 3a, 3b, 3c, 3d are provided at one end of a column 2 detachably secured to, for instance, a bed of a lathe via a fixing member 1 in such a manner as to be disposed perpendicularly of the column 2 and project in the four directions. Contacts 4a, 4b, 4c, 4d formed of a carbide tool material are respectively fitted to the centers of the tips of the plungers 3a - 3d. In addition, the end surfaces of the contacts 4a to 4d which are remoter from the shaft 2 are formed to a high level of precision.

This touch sensor is disposed in the vicinity of, for instance, a chuck of a lathe, and if an object to be detected such as a cutting tool is brought into contact with any of the contacts 4a to 4d, a trigger signal is adapted to be output.

With this conventional technique, however, since the contacts 4a to 4d are respectively fitted to the tip portions of the plungers 3a to 3d, the distance between the respective opposing ones of the contacts 3a to 3d, i.e., the dimension A shown in Figs. 9 and 10, becomes inevitably large.

For this reason, when the position of a cutting tool or a member is detected, it is necessary to enlarge the distance between the object to be detected and the contacts. If the distance between, for instance, the cutting tools to be detected is small, there is the possibility that it becomes impossible to effect detection due to the large dimension A, and the setup of an operation is disadvantageously restricted as a result.

In addition, since it is necessary to cause the plungers to project from the column and to install the contacts to the respective tips thereof, production costs are liable to increase.

"American Electricians' Handbook" discloses a rotary type of control switch having a rotatable shaft on a distal end of which a handle is provided for rotating the shaft into predetermined switch positions. Such a switch is used for controlling the operation of an electrically operated equipment from a switch board.

"Electronic Welt 92" discloses different types of tap switches having a rotatable shaft for rotating movable contacts. Such a switch has different predetermined switch positions.

GB-A-2,139,357 discloses a touch sensor as defined in the pre-characterizing part of claim 1, which can be fixed with the rear end thereof to a slider of a measuring instrument for example. This touch sensor has a probe shaft rotatably supported on a sensor body via a pivot and including a spherical measuring element at one end and a contacting element at the other end thereof. When a contact point where the measuring element touches the object being measured coincides with the neutral axis of the shaft, the contacting element touches an electrical contact, thereby generating a touch signal. However, in order to be operable in two directions this kind of touch sensor requires a position control means for holding the center axis of the probe shaft in alignment with the neutral axis of the touch sensor. Therefore, the touch sensor has a complicated construction.

Accordingly, it is an object of the present invention to provide a touch sensor which is capable of realizing the economic efficiency with a compact and simple arrangement, thereby overcoming the above described drawbacks of the prior art.

The invention recites in a touch sensor of the kind referred to in claim 1.

Particular embodiments of the invention are set out in the dependent claims 2 to 4.

The invention will now be described by way of example with reference to the accompanying drawings in which:
Figs. 1 to 4 relate to a first embodiment of the present invention, in which
Fig. 1 is a side elevational view of a touch sensor;
Fig. 2 is a view taken in the direction of the arrow A of Fig. 1;
Fig. 3 is a view taken along the line III-III of Fig. 1 in the direction of the arrows;
Fig. 4 is a view taken along the line IV-IV of Fig. 1 in the direction of the arrows;
Figs. 5 to 8 relate to a second embodiment of the present invention, in which

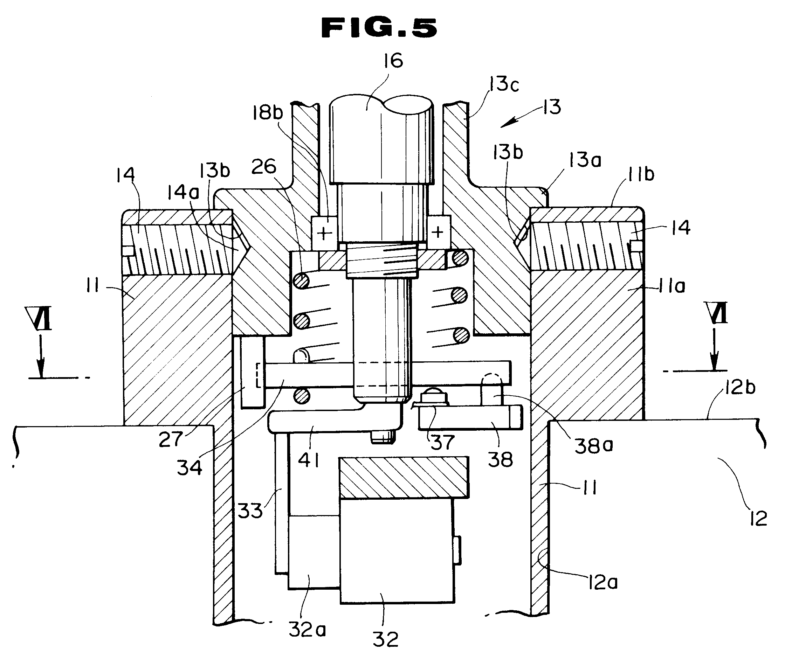

Fig. 5 is a side cross-sectional view illustrating essential portions of the touch sensor;

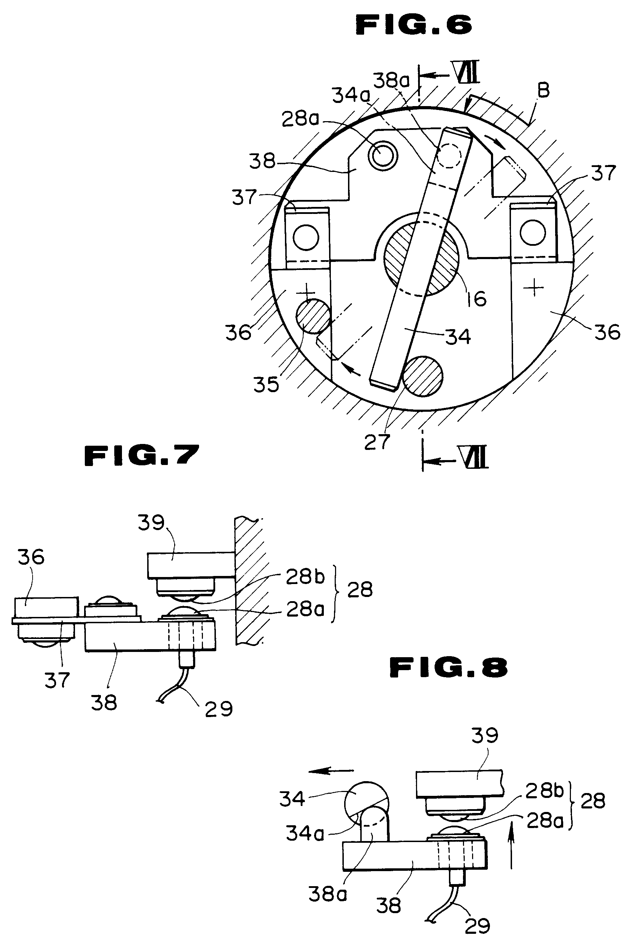

Fig. 6 is a view taken along the line VI-VI of Fig. 5 in the direction of the arrows;
Fig. 7 is a view taken along the line VII-VII of Fig. 5 in the direction of the arrows;
Fig. 8 is a view taken along the line B of Fig. 6 in the direction of the arrow;
Figs. 9 and 10 relate to a conventional technique, in which
Fig. 9 is a top plan view of the touch sensor; and
Fig. 10 is a side elevational view thereof.

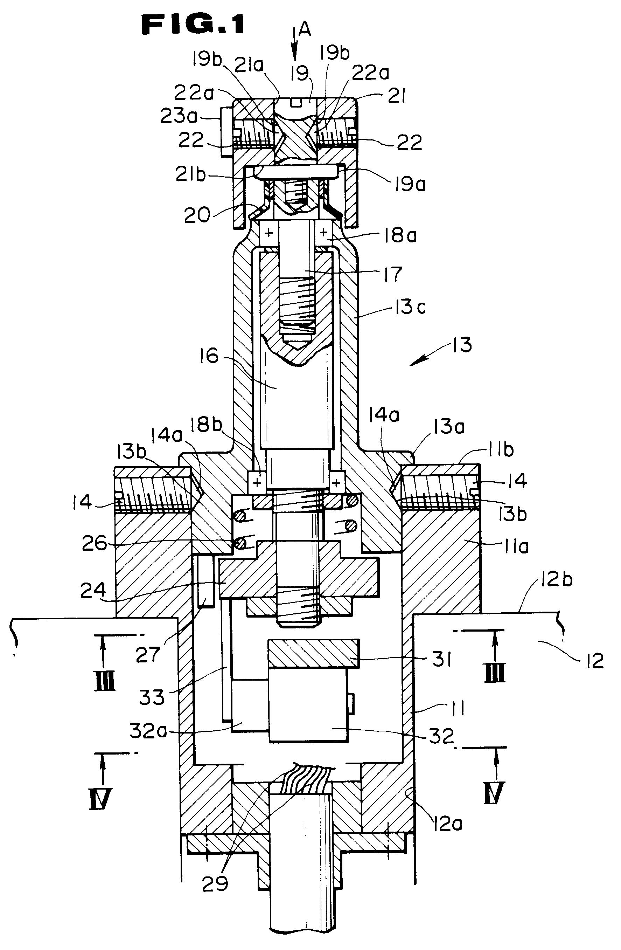

Figs. 1 to 4 illustrate a first embodiment of the present invention.

In these drawings, reference numeral 11 denotes a housing which is formed into a substantially cylindrical shape and on one side of which a flange 11a is provided. This housing 11 is inserted into an opening 12a of a fixing member 12 which is installed on, for instance, a bed of a lathe, and is secured as the flange 11a is retained at an upper surface 12b of this fixing member 12.

In addition, an upper side of the housing 11 which is provided with the flange 11a is open, and a holder 13 is detachably secured at a portion of this opening.

In other words, a flange 13a is formed midway in the holder 13 and is retained at an upper surface 11b of the flange of the housing 11. Fixing bolts 14 are screwed into the flange 11a of the housing 11 from the outside of the flange 11a. A tip portion 14a of each of the fixing bolts 14 is formed into a sharply pointed shape. The holder 13 is secured even more firmly as this tip portion 14 is engaged with an engaging portion 13b provided at a position at which the tip portion 14a is inserted in the housing 11 of the holder 13.

An upwardly projecting cylindrical portion 13c is formed at a central portion of the holder 13, and a shaft 16 is accommodated in this cylindrical portion 13c. A second-shaft 17 is screwed into an upper end of this shaft 16, and the second shaft 17 and the shaft 16 are rotatably supported by the cylindrical portion 13c via bearings 18a, 18b. In addition, a dust-proof cover 20, which is formed of, for instance, a flexible material, is provided between this second shaft 17 and the cylindrical portion 13c so as to prevent the dust from entering the holder 13.

One end of the second shaft 17 projects more upwardly than the cylindrical portion 13b of the holder 13, and a third shaft 19 is screwed into this projecting end portion. Incidentally, the axes of the second and third shafts 17, 19 are aligned with the axis of the shaft 16.

A rotary member 21 whose top plane is formed into a square shape is provided on an upper portion of the third shaft 19. Namely, an opening 21a is formed in a central portion of this rotary member 21, and an upper portion of the third shaft 19 is inserted into this opening 21a. In addition, a flange 19a is formed on this third shaft 19 on the side of the second shaft 17, and a lower end surface 21b of the rotary member 21 abuts against this flange 19a.

Furthermore, fixing bolts 22 are screwed into the rotary member 21 from the outside of the rotary member 21. A tip portion 22a of each of these fixing bolts 22 which is formed into a sharply pointed shape is exposed in the opening 21a, and is engaged with an engaging portion 19b formed in the third shaft 19.

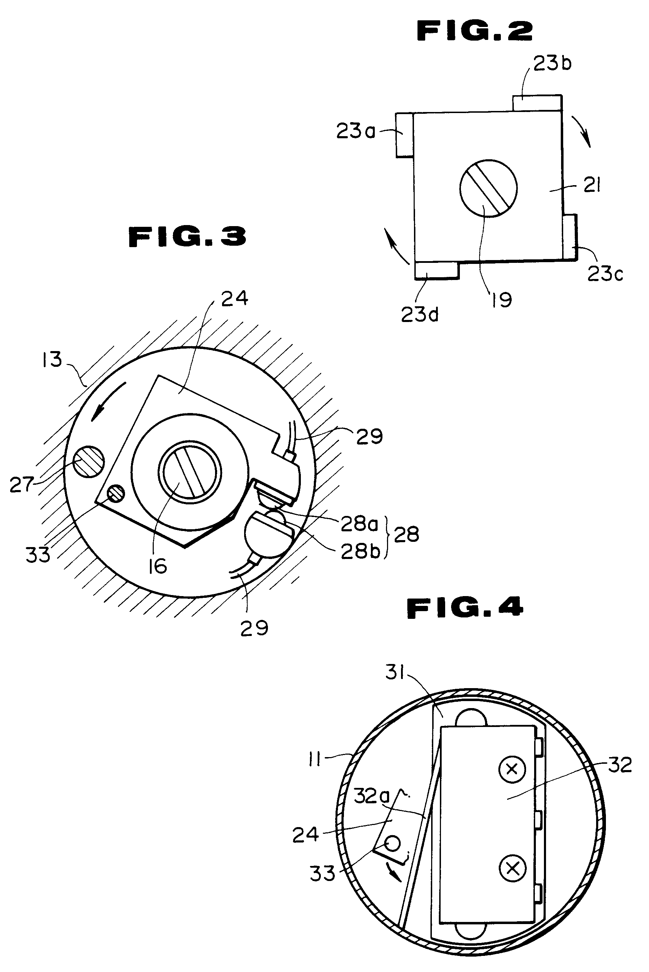

As shown in Fig. 2, probes 23a, 23b, 23c, 23d, with which an object to be detected such as a cutting tool, a member or the like is brought into contact, are formed at terminating portions of the respective sides of the rotary member 21 which constitute the square shape. These probes 23a to 23d are spaced apart from the axis of the third shaft 19 by predetermined distances. When the object to to be detected is brought into contact with any of the probes 23a to 23d, the rotary member 21 is adapted to rotate about the third shaft 19 in the direction of the terminating end portions of the sides of the rotary member 21 at which the probes 23a to 23d are provided, i.e., in the direction of the arrows shown in Fig. 2.

Meanwhile, a lower end portion of the shaft 16 supported in the cylindrical portion 13c of the holder 13 is inserted in the housing 11, and a plate 24 having a substantially square shape is secured at the inserted portion.

A spring 26 is interposed between the plate 24 and the holder 13, and the plate 24 is constantly rotatively urged by an urging force of this spring 26 in the direction opposite to the direction of rotation when the object to be detected is brought into contact with any of the probes 23a to 23d.

In addition, a stopper 27 is provided on a lower end surface of the holder 13 inserted into the housing 11 so as to stop the rotation of the plate 24 by abutting against one side of the plate 24 when the plate 24 is rotated by more than a predetermined amount of rotation.

As shown in Fig. 3, a movable contact 28a is provided on the plate 24 via an insulator, while a fixed contact 28b opposed to this movable contact 28a is provided inside the housing 11 via an insulator. The movable contact 28a is brought into contact with the fixed contact 28b by an urging force of the spring 26 to constitute a closed circuit, and as the movable contact 28a is brought into contact with the fixed contact 28b, the rotation of the plate 24 is stopped.

When the shaft 16 rotates as the object to be detected is brought into contact with any of the probes 23a to 23d, a trigger signal is adapted to be issued as the movable contact 28a is separated from the fixed contact 28b. This trigger signal is adapted to be output to outside the housing 11 via cords 29 each connected to the movable contact 28a and the fixed contact 28b.

The movable contact 28a and the fixed contact 28b constitute a contact 28.

A microswitch 32 is secured inside the housing 11 and below the plate 24 via a fixing member 31. A dog 33 is secured to the plate 24 and is adapted to press a lever 32a of the microswitch 32 upon rotation of the plate 24, thereby turning on the microswitch 32. When this microswitch 32 is turned on, a trigger signal similar to that of the contact 28 is issued to outside the housing 11 via other cords 29. This microswitch 32 is provided to ensure that a trigger signal can be issued positively even when an overrun has occurred at the time when it is difficult to issue a signal due to some fault in the contact 28. For this reason, this microswitch 32 can be omitted, if necessary.

When the position of an object to be detected such as a cutting tool is detected using a touch sensor having the above-described arrangement, the housing 11 of the touch sensor is inserted into the opening 12a of the fixing member 12, and this fixing member 12 is installed on, for instance, a bed of a lathe, while the touch sensor is installed in the vicinity of, for instance, a chuck. The probes 23a to 23d provided on the rotary member 21 are aligned with the direction in which the object to be detected such as a cutting tool moves.

In this state, the shaft 16, the plate 24 and the like are rotatively urged in a predetermined direction by the spring 26, and the movable contact 28a provided on the plate 24 is held in contact with the fixed contact 28b.

When the cutting tool is brought into contact with any of the probes 23a to 23d, the rotational moment is provided in the rotary member 21 as the result of contact with the cutting tool. Subsequently, the plate 24 is rotated via the shaft 16 and the like in opposition to the urging force of the spring 26, the movable contact 28a is separated from the fixed contact 28b, thereby issuing a trigger signal. The position of the object to be detected is detected as this trigger signal is output to outside the housing 11 via the cords 29.

In addition, the dog 33 secured to the plate 24 moves in conjunction with the rotation of the plate 24 and presses the lever 32a of the microswitch 32 secured below the plate 24. A trigger signal similar to the aforementioned signal is then issued by this microswitch 32, and is output to outside the housing 11 via the other cords 29.

In this embodiment, since the arrangement is such that the trigger signal is issued doubly, even if it has become difficult for, for instance, the contact 28 to issue a signal for some reason or other, the trigger signal can be issued positively. In addition, it is also possible to provide an arrangement in which an overrun alarm is generated by this microswitch.

In addition, when the rotary member 21 has rotated by more than a predetermined amount, the rotation thereof is stopped as one side of the plate 24 is brought into contact with the stopper 27.

When the object to be detected is separated from any of the probes 23a to 23d, the plate 24 is rotatively urged by the urging force of the spring 26, which in turn causes the movable contact 28a of the plate 24 to abut against the fixed contact 28b, thereby stopping any further rotation of the plate 24. In addition, the rotary member 21 provided with the probes 23a to 23d is returned to its original position, and is set ready for an ensuing measurement.

Referring now to Figs. 5 to 8, a description will be given of a second embodiment of the present invention. Those members that are identical with those shown in the first embodiment or perform similar functions are denoted by the same reference numerals and a description thereof will be omitted.

In this embodiment, a bar 34 is provided at a lower end portion of the shaft 16 in such a manner as to be perpendicular to the shaft 16, this bar 34 is rotatively urged by the spring 26, and the stopper 27 is brought into contact with one end of the bar 34 so as to restrict the rotation of the shaft 16. In addition, another stopper 35 is provided on an underside of the holder 13 in the direction of rotation of the shaft 16, and this arrangement makes it possible to prevent the shaft 16 from overrunning by more than a predetermined angle as the bar 34 is brought into contact with the stopper 35.

As shown in Fig. 8, a slanting notched portion 34a is formed on the side of the bar 34 opposite to the side thereof with which the stoppers 27, 35 are brought into contact.

Meanwhile, the housing 11 is provided with a fixing member 36, and a movable plate 38 is retained by this fixing member 36 via a leaf spring 37. A projection 38a is provided on an upper surface of this movable plate 38 and is held in contact with the notched portion 34a of the bar 34. When this notched portion 34a is retreated from the projection 38a, the movable plate 38 is adapted to move vertically by a predetermined amount by an urging force of the leaf spring 37.

The movable plate 38 is provided with the movable contact 28a in such a manner as to move in conjunction with the movement of the movable plate 38. In addition, the fixed contact 28b, with which the movable contact 28a is brought into contact when the movable plate 38 is moved upwardly, is provided on the housing 11 via a fixing plate 39.

In addition, the dog 33 is secured to the lower end of the shaft 16 via a supporting member 41, and the microswitch 32 disposed below the bar 34 is adapted to be turned on by this dog 33.

In this arrangement, when the shaft 16 is rotated by the rotational moment produced by the object to be detected in opposition to the urging force of the spring 26, the bar 34 is rotated in conjunction with the rotation of the shaft 16. Subsequently, the notched portion 34a provided at one end of the bar 34 is retreated by the projection 38a of the movable plate 38, which in turn causes the movable plate 38 to move upwardly by a predetermined amount by the urging force of the leaf spring 37.

This movable plate 38 is provided with the movable contact 28a, and, when the movable plate 38 is moved, the movable contact 28a is brought into contact with the fixed contact 28b, thereby issuing a trigger signal.

In addition, as the dog 33 rotates in conjunction with the rotation of the shaft 16 and the microswitch 32 is thereby turned on, a trigger signal or an overrun alarm is issued in a similar manner.

It should be noted that, although in these embodiments an example has been described in which the configuration of the rotary member 21 is made square and the probes 23a to 23d are provided on the four sides thereof, this rotary member 21 should not be restricted to the square configuration, and another configuration such as a triangular or hexagonal configuration may also be used.

In addition, as for the probes 23a to 23d, it suffices if they are capable of rotating the shaft 16 upon contact with the object to be detected, and the configuration, position, etc. thereof are not restricted to those shown in the foregoing embodiments.

As has been described above, according to the present invention, since the distance between the opposing ones of the probes is reduced, it is possible to reduce the moving distance of the objects to be detected such as cutting tools, and even when the distance between the objects to be detected is small, it does not become impossible to effect detection and the setup of an operation is not restricted.

Additionally, the arrangement is simple, and it is possible to prevent an increase in production costs.

## Claims

1. Touch sensor comprising:
- a housing (11),
- a rotatable shaft (16, 17, 19) projecting from one side of said housing (11),
- at least one probe (23) for rotating said shaft (16, 17, 19) as an object to be detected is brought into contact therewith, said probe (23) being provided at a portion of the shaft projecting from the housing (11),
- a contact means (28) disposed in said housing (11) and turned on or off by the rotation of the shaft to issue a trigger signal, said contact means comprising a movable contact (28a) moved by rotation of said shaft and a fixed contact (28b) and
- a spring means (26),
**characterized** in
- that the spring means (26) biases said rotatable shaft (16, 17, 19) around a longitudinal axis thereof such that the movable contact (28a) is in contact with the fixed contact (28b),
- that said at least one probe (23) is disposed at a side surface of a rotary member (21) such that the probe is spaced apart from the axis of the shaft by a predetermined distance and adapted to rotate said shaft against the biasing force of said spring means (26) when the object to be detected is brought in contact therewith.

2. Touch sensor according to claim 1,
wherein said shaft is provided with a dog (33) fixed thereto and further comprising a microswitch (32) positioned within said housing (11) to issue an auxiliary trigger signal by being turned on or off by said dog (33) by the rotation of said shaft.

3. Touch sensor according to claim 1 or 2,
wherein said movable contact (28a) is provided on a plate (24) fixed to the shaft (16) and adapted to rotate in conjunction with the shaft (16) and said fixed contact (28b) is disposed in face-to-face relationship with the movable contact (28a).

4. Touch sensor according to claim 1 or 2,
wherein said movable contact (28a) is provided on a plate (38) fixed to the housing (11) via a leaf spring (37) to be movable in the longitudinal direction of the shaft and said fixed contact (28b) is disposed in a face-to-face relationship with the movable contact (28a), said shaft (16) comprising a bar (34) engagable with the plate (38) for longitudinal movement thereof during rotation of the shaft (16).

## Patentansprüche

1. Kontaktfühler mit
- einem Gehäuse (11),
- einem aus einer Seite des Gehäuses (11) herausragenden drehbaren Schaft (16, 17, 19),
- zumindest einem Fühler (23) zum Drehen des Schaftes (16, 17, 19), wenn ein zu erfassender Gegenstand damit in Berührung gebracht wird, wobei der Fühler (23) an einem Teil des aus dem Gehäuse (11) herausragenden Schaftes vorgesehen ist,
- einer Kontakteinrichtung (28), die in dem Gehäuse (11) angeordnet ist und durch die Drehung des Schaftes zum Ausgeben eines Triggersignals ein- oder ausgeschaltet wird, wobei die Kontakteinrichtung einen beweglichen Kontakt (28a), der durch die Drehung des Schaftes bewegt wird, und einen ortsfesten Kontakt (28b) umfaßt, und
- einer Federeinrichtung (26),
dadurch **gekennzeichnet,**
- daß die Federeinrichtung (26) den drehbaren Schaft (16, 17, 19) um seine Längsachse herum so vorspannt, daß der bewegliche Kontakt (28a) in Berührung mit dem ortsfesten Kontakt (28b) steht,
- daß der zumindest eine Fühler (23) an einer Seitenfläche eines Drehteiles (21) so angeordnet ist, daß der Fühler mit einem vorbestimmten Abstand von der Achse des Schaftes entfernt angeordnet ist und geeignet ist, den Schaft gegen die Vorspannkraft der Federeinrichtung (26) zu drehen, wenn der zu erfassende Gegenstand damit in Berührung gebracht wird.

2. Kontaktfühler nach Anspruch 1,
wobei der Schaft mit einem daran befestigten Mitnehmer (33) ausgestattet ist und ferner ein Mikroschalter (32) enthalten ist, der innerhalb des Gehäuses (11) zum Ausgeben eines Hilfstriggersignals angeordnet ist, indem dieser bei der Drehung des Schaftes mit Hilfe des Mitnehmers (33) ein- oder ausgeschaltet wird.

3. Kontaktfühler nach Anspruch 1 oder 2,
wobei der bewegliche Kontakt (28a) auf einer Platte (24) vorgesehen ist, die an dem Schaft (16) befestigt und geeignet ist, sich in Verbindung mit dem Schaft (16) zu drehen, und der ortsfeste Kontakt (28b) in einer gegenüberliegenden Beziehung zu dem beweglichen Kontakt (28a) angeordnet ist.

4. Kontaktfühler nach Anspruch 1 oder 2,
wobei der bewegliche Kontakt (28a) auf einer Platte (38) vorgesehen ist, die über eine Blattfeder (37) an dem Gehäuse (11) befestigt ist, so daß diese in der Längsrichtung des Schaftes beweglich ist, und der ortsfeste Kontakt (28b) in einer gegenüberliegenden Beziehung zu dem beweglichen Kontakt (28a) angeordnet ist, wobei der Schaft (16) einen Stab (34) aufweist, der während der Drehung des Schaftes (16) mit der Platte (38) zu deren Längsbewegung in Eingriff bringbar ist.

## Revendications

1. Palpeur comprenant:
- un logement (11),
- un arbre rotatif (16, 17, 19) faisant saillie d'un côté dudit logement (11),
- le capteur (23) au moins présent pour faire tourner ledit arbre (16, 17, 19) lorsqu'un objet devant être détecté est mis en contact avec lui, ledit capteur (23) étant disposé sur une portion de l'arbre faisant saillie du logement (11),
- un moyen de contact (28) disposé dans ledit logement (11) et actionné pour établir ou couper un contact par la rotation de l'arbre de manière à émettre un signal de déclenchement, ledit moyen de contact comprenant un contact mobile (28a) mu par la rotation dudit arbre et un contact fixe (28b) et
- un moyen de ressort (26),
caractérisé en ce que
- le moyen de ressort (26) charge ledit arbre rotatif (16, 17, 19) selon un axe longitudinal si bien que le contact mobile (28a) est en contact avec le contact fixe (28b),
- le capteur (23) au moins présent est disposé sur une surface latérale d'un élément rotatif (21) si bien que le capteur est éloigné de l'axe de l'arbre par une distance prédéterminée et adapté pour faire tourner ledit arbre contre la force de charge dudit moyen de ressort (26) lorsque l'objet devant être détecté est mis en contact avec lui.

2. Palpeur selon la revendication 1, dans lequel ledit arbre est muni d'un taquet (33) qui y est fixé et comprend également un microrupteur (32) placé dans ledit logement (11) afin d'émettre un signal de déclenchement auxiliaire lorsqu'il est actionné pour établir ou couper le contact au moyen dudit taquet (33) par la rotation dudit arbre.

3. Palpeur selon la revendication 1 ou 2, dans lequel ledit contact mobile (28a) est disposé sur une plaque (24) fixée a l'arbre (16) et adaptée pour tourner conjointement avec l'arbre (16) et ledit contact fixe (28b) est disposé en vis-à-vis dudit contact mobile (28a).

4. Palpeur selon la revendication 1 ou 2, dans lequel ledit contact mobile (28a) est disposé sur une plaque (38) fixée au logement (11) au moyen d'un ressort à lames (37) de manière à pouvoir se déplacer dans le sens longitudinal de l'arbre et ledit contact fixe (28b) est disposé en vis-à-vis du contact mobile (28a), ledit arbre (16) comprenant une barre (34) pouvant s'engrener dans la plaque (38) pour permettre à celle-ci de se déplacer longitudinalement durant la rotation de l'arbre (16).
